# EUROPEAN PATENT SPECIFICATION

(11) **EP 0 677 679 B1**
(45) Date of publication and mention of the grant of the patent: **01.07.1998**
(21) Application number: 95105408.9
(22) Date of filing: 10.04.1995
(51) Int. Cl.: F16F 9/512, F16F 9/18

(54) **Hydraulic shock absorber with self-adjusting reaction**
Hydraulischer Stossdämpfer mit selbstregelnder Reaktion
Amortisseur hydraulique avec réaction à autoréglage

(30) Priority: 15.04.1994 IT MO940056
(43) Date of publication of application: 18.10.1995
(73) Proprietor: DIGITEK SRL, I-41033 Concordia s/Secchia (MO) (IT)
(72) Inventor: Bigi, Maurizio, I-41100 Modena (MO) (IT)
(74) Representative: Gislon, Gabriele

(56) References cited:
- EP-A- 0 051 506
- EP-A- 0 267 543
- EP-A- 0 425 885
- EP-A- 0 466 628
- DE-A- 1 505 497
- DE-A- 3 309 042
- DE-A- 3 934 386
- FR-A- 1 012 219
- US-A- 2 720 944
- US-A- 3 041 061
- PATENT ABSTRACTS OF JAPAN vol. 007 no. 059 (M-199) ,11 March 1983 & JP-A-57 204343 (HONDA GIKEN KOGYO KK;OTHERS: 01) 15 December 1982,

## Description

The invention concerns an hydraulic shock absorber with self-adjusting reaction, that is, a shock absorber which, whilst being entirely hydraulic, in other words, completely free of chambers containing pressurised gases, or gas emulsions with liquids, enables the reaction to be varied, in opposite directions, both in compression and in extension.

The prior art does not comprise entirely hydraulic shock absorbers with self-adjusting reaction. It comprises, however, various types of shock absorber in which the hydraulic liquid is made to pass through openings with differing and/or adjustable sections, the so-called throttles, that affect the speed of contraction, under the action of the applied force, and/or the speed of extension of the shock absorber supports when it is unloaded. Furthermore, there are devices for adjusting the trim of vehicles, achieved using single or double acting hydraulic annular cylinders that shift the reaction point of the spring with respect to the shock absorber, of the known prior art variety, thereby requiring external hydraulic or electro-hydraulic control and adjustment circuits. Furthermore, all shock absorbers of the known type, if not designed to operate with an emulsion of liquid and air or gas, have to have a pneumatic-hydraulic accumulator integrated or laterally associated with the body of the shock absorber, in order to compensate for the variation in volume caused by the entry of the stem into one of the chambers of the cylinder.
This type of design makes all shock absorbers subject to a non zero intervention force threshold, depending on the minimum pressure in the said accumulator and on the section of the stem.

Such prior art may be subject to considerable improvements with a view to disassociate the reaction force of the shock absorber from the presence, or otherwise, of the pneumatic-hydraulic accumulator and making it directly related to the load applied to the shock absorber.

From the foregoing emerges the need to solve the technical problem of modifying the response of the shock absorber in function of the instantaneous load applied between its supports, of compensating the increase in volume due the entry of the stem of the piston into the cylinder of the shock absorber whilst favouring the adjustment of the reaction to the applied load.

The invention solves the said technical problem by adopting a shock absorber consisting of: a first double-acting hydraulic cylinder, associated with an elastic element, positioned between the support of the shock absorber on the stem of the first cylinder and the external casing of the said first cylinder, for returning it to its original position after the external dynamic load ceases to be applied, having a piston with openings for the reflux of hydraulic liquid from one chamber to the other; a second hydraulic cylinder, single or double acting, connected in series with the previous one so that the two chambers without stem are directly communicating, constituting a variable volume correction chamber; the second support of the shock absorber rigidly connected to the stem or the body of the said second cylinder; the two chambers of the first cylinder and of the second cylinder filled with a predetermined quantity of hydraulic liquid, but less than the total volume of the said chambers calculated with the pistons and relative stems fully extended.

In a preferred embodiment, the invention shows control elements for the reflux of the liquid through the openings in the piston of the said first cylinder consisting of disk shaped blades, flexible or not, of which at least the one on the opposite side to the stem, being adjustable from the outside with a rod inside the said stem acting on it by means of an elastic element.

In another preferred embodiment, the invention shows the said second cylinder consisting of a double acting cylinder with annular chamber on the side of the stem connected to the outside.

In another preferred embodiment, the invention shows the said annular chamber of the second cylinder connected, by means of an hydraulic connection inside the piston, or external to it, to the correction chamber so as to recover the liquid flowing out, during retraction, of the said annular chamber, thereby constituting the recovery chamber, in the correction chamber.

In another preferred embodiment, the invention shows in combination with one or more of the previous characteristics: a diameter of the second hydraulic cylinder which is larger than the diameter of the said first cylinder, in order to limit overall axial dimensions.

In another preferred embodiment, the invention shows a diameter of the stem of the said first cylinder which is smaller than the diameter of the stem of the said second cylinder.

In another preferred embodiment, the invention shows the said hydraulic connection between the correction chambers and the recovery chambers including a one-way check valve in parallel with a throttle valve that can be adjusted even during operation.

In another preferred embodiment, the invention shows finally, in combination with one or more of the previous characteristics: a pneumatic-hydraulic accumulator connected to the said correction chamber, either directly or through a throttle and interceptor valve.

The advantages offered by this invention are an extremely high degree of adaptability to the variations in the applied loads and of the reactions of the shock absorber in the various load conditions.

In fact, this adaptability is made possible by the pressure, in the lower chamber of the cylinder and in the correction chamber, depending exclusively on the instantaneous applied load, apart from a possible pre-pressurisation generated by the said accumulator; the return stroke, that is the extension of the shock absorber, is also dependant on, as well as the spring and the reflux openings, the said pressure in the lower and correction chambers which is a direct function of the instantaneous load applied to the supports. The configurations indicated above enable the automatic adaptation of the response, that is, of the damping, without necessarily requiring external devices that modify the characteristics of the shock absorber.

Finally, the equilibrium level of the shock absorber can be easily adjusted by pumping liquid into the chambers of the shock absorber, thereby achieving a different equilibrium height with a greater distance between the supports.

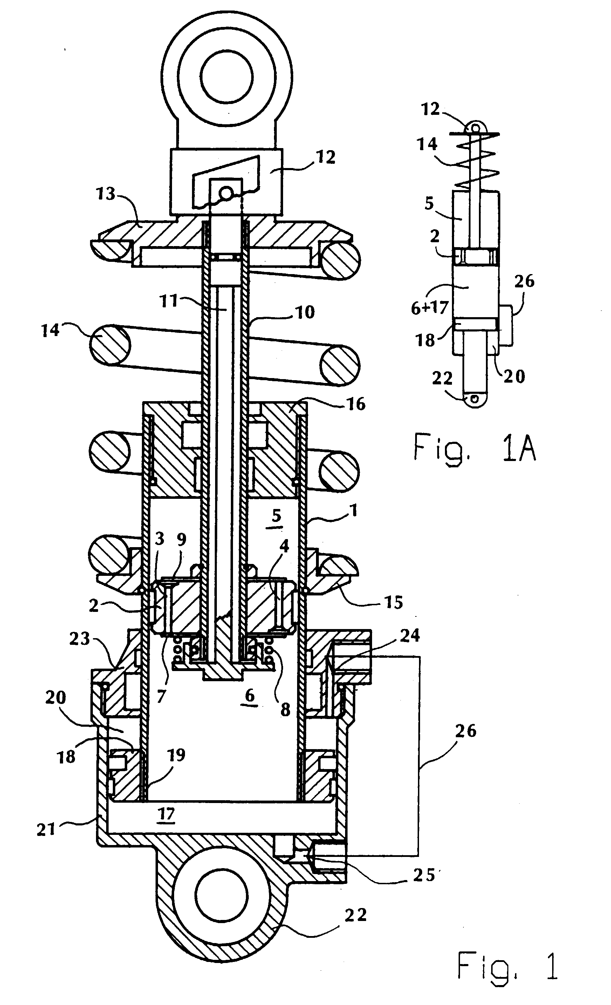

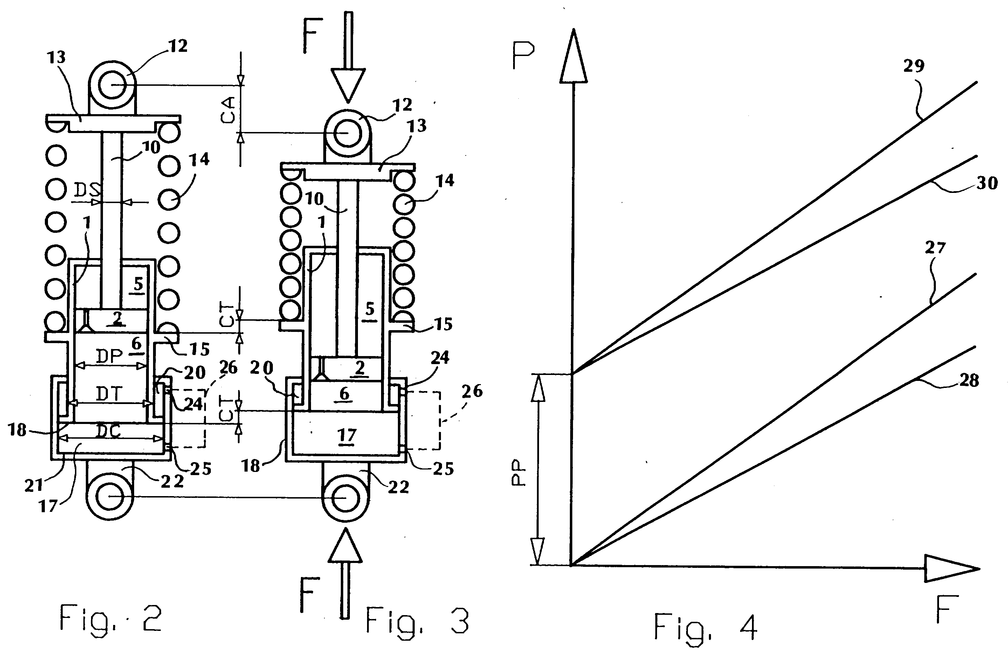

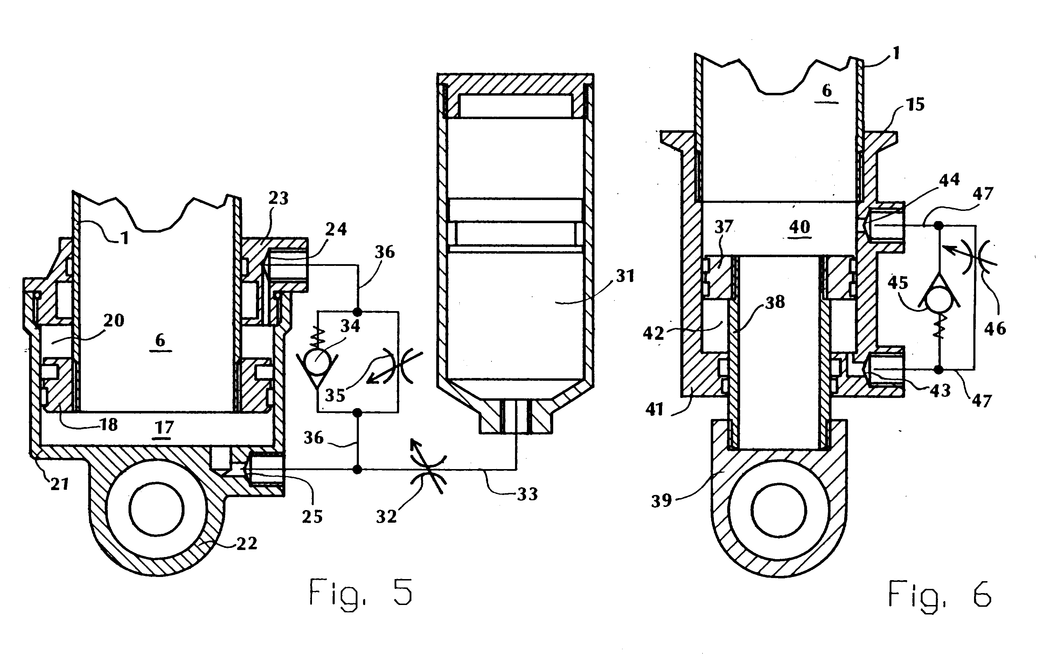

Some embodiments of the invention are illustrated, purely by way of example, in the three tables of drawings attached in which Figure 1 is the longitudinal section of a shock absorber with self-adjusting reaction in compact form; Figure 1A is the hydraulic circuit of the shock absorber as described; Figure 2 is a schematic representation of the shock absorber in an extended position; Figure 3 is a representation as in Figure 2 but in a retracted position; Figure 4 is the typical response diagram with different assembly and/or operation configurations; Figure 5 is the application of a known type of pneumatic-hydraulic accumulator and the control of the hydraulic recovery effect with a one way adjustable throttle; Figure 6 is the lower extremity of an hydraulic shock absorber as described having the second correction cylinder with a diameter equal to the diameter of the first cylinder.

The figures show: 1, Figure 1, a cylindrical tube inside which a piston 2 moves in the known manner and which has openings 3 and 4, gauged and adapted for the flow of liquid between the upper chamber 5 and the lower chamber 6, in both directions, against the action of the blade 7 occluding the opening 3 for controlling the extension, counteracted by an adjustable helical spring 8, and by the flexible blade 9 occluding the opening 4, for controlling the retraction; 10, the hollow stem containing rod 11 for adjusting the said spring 8, by rotating the upper attachment 12 with respect to guide and support disk 13 of the helical reaction spring 14; 15, a support ring for the said helical spring 14 made integral with and positioned on the outside of the cylindrical tube 1; 16, the end cap, of the known type, of the upper chamber 5 and guide for the stem 10; 17, a cylindrical correction chamber directly communicating with the lower chamber 6 constituting an extension of it; 18, an annular piston applied to the lower end 19 and to the outside of the said cylindrical tube 1, separating the annular recovery chamber 20 from the correction chamber 17; 21, the body of the second cylinder outside tube 1, which is fitted with the lower support 22 of the shock absorber; 23, the end cap of the said annular chamber 20, with a guiding hole for the cylindrical tube 1 constituting a stem; 24, a conduit connecting the recovery chamber 20 to the outside; 25, a conduit connecting the correction chamber 17 to the outside; 26, the schematic hydraulic connection between the two correction and recovery chambers by means of corresponding conduits 25 and 24.

The figures also show: DS, Figure 2, the diameter of stem 10; DP, the diameter of piston 2; DT the external diameter of cylindrical tube 1, coinciding with the internal diameter of the annular recovery chamber 20; DC, the diameter of the correction chamber 17, coinciding with the external diameter of the annular recovery chamber 20 and with the diameter of the annular piston 18; F, Figure 3, the external force applied to the shock absorber, the instantaneous sum of the force (load) normally applied and of the variable force to be damped; CA, the retraction stroke of the shock absorber and CT, the correction stroke in the opposite direction of the annular piston 18 and, consequently, of the cylindrical tube 1 and of the support ring 15 of the helical spring 14; 27, Figure 4, the characteristic line of proportionality between the force F and the pressure P of the liquid in chambers 5, 6, 17 and 20, with recovery between the last two; 28, an analogous characteristic line, with identically sized component parts, but with the annular chamber 20 connected to the outside; 29 and 30, two characteristic lines analogous to the previous ones, but shifted by the pressurisation pressure PP generated by a pneumatic-hydraulic accumulator 31, Figure 5, of a known type.

Finally, the figures also show: 32 the interceptor and throttle valve in the schematic hydraulic connection 33 between the said accumulator 31 and the conduit 25 of the correction chamber 17; 34, the one way check valve coupled with an adjustable throttle valve 35, placed in the hydraulic line 36 controlling the recovery effect between the chambers 17 and 20; 37, Figure 6, an annular piston with a diameter equal to the internal diameter of the cylindrical tube 1, but outside a cylindrical tube with smaller diameter 38, constituting a hollow stem, to which a lower attachment 39 is rigidly fixed with seal; 40, the correction chamber included between the lower chamber 6 and the piston 37; 41, the body below the said cylindrical tube 1 guiding the said smaller diameter cylindrical tube 38 and piston 37; 42 an annular recovery chamber connected with a conduit 43 to the outside; 44, the conduit connecting the chambers 6 and 40 to the outside; 45, the one way check valve coupled with an adjustable throttle valve 46, placed in the hydraulic line 47 controlling the recovery effect between the chambers 42 and 40.

Operation of the shock absorber is as follows: when an external load is applied, force F in Figure 3, the two supports 12 and 22 or 39 come closer together with the compression of the spring 14 and the flow of liquid from the lower chamber 6 to the upper chamber 5, through the opening 4 controlled by the flexible blade 9; when contraction ceases the subsequent extension is controlled by blade 7 loaded by the helical spring 8 so as to allow a rapid extension if in the meantime the pressure in chamber 6 has dropped to zero or to values corresponding to the normal load supported by the shock absorber: in this way extension occurs very rapidly as blade 7, pushed by spring 8 with a force lower and proportional to the pressure in chamber 6, lifts more easily from opening 3; on the other hand, if, after the retraction, a high load F remains applied, sufficient to press on the plate of the adjusting rod 11 and, therefore, on the said spring 8, thereby allowing only small displacements of the blade 7 from the opening 3, the extension is braked in a more marked manner the higher force F is and, therefore, the higher the pressure P in the chamber 6 is: if in this situation there is a further increase in force F, this is compensated by the compliance of the shock absorber and the further compression of spring 14.

Because of the low pressures involved, the liquid used, hydraulic oil, can be considered to be incompressible, that is, it is not subject to reductions in specific volume within the range of the operating pressures: in the shock absorber as described, therefore, the total volume of chambers 5 and 6 of the cylinder and of the correction chamber 17 or 40 are constant in all conditions; if the connection 26, 36 or 47 of the recovery chamber 20 or 42 is present, its volume is included in the sum of volumes that remain constant.

The correction chamber 17, 40, being of variable volume, and being in direct contact, so constituting a single volume (6+17, Figure 1A), with the lower chamber 6, compensates the effect of the stem 10 entering into the upper annular chamber 5: the compensation occurs with the expulsion of the second piston 18, 38 and with the total volume of the three chambers 5, 6 and 17 or 40 remaining constant; the recovery effect between the annular chambers 20 or 42, when they are connected to the respective correction chambers, highlights the correcting effect with a further addition of volume of liquid: the constant volume in this case is maintained with the sum of the volumes of the four chambers 5, 6 or 17 and 20 or 40 and 42.

The particular arrangement of the cylinders in series, filled only with a predetermined volume of liquid creates a fluid mechanical connection between the two supports 12 or 22, 39 of the shock absorber, even though between them there is an incompressible fluid, the hydraulic oil: it follows that the reaction of the shock absorber is limited only to when there is an external load applied which keeps all the chambers constantly connected with one another pressurised, because if the external load ceases then also the reaction to it ceases, as occurs with the well known ideal behaviour of constraints.

Furthermore, due to the particular compensation of the volumes, it follows that it is no longer necessary to adopt a pneumatic-hydraulic accumulator in order to compensate for the variations in the volume inside one of the chambers of the cylinder of the shock absorber, but the constant connection between one another brings about their mutual compensation.

Design adjustments with a view to obtaining different slope characteristic lines, as shown in Figure 4, can be achieved by connecting recovery chambers 20 or 42 with air: with unaltered dimensions a shallower slop in the line of proportionality between the force F and the pressure P of the liquid in the chambers; otherwise, varying the dimensions of the stems, DS and DT in the case of Figure 1, or of the diameters of the stems 10 and 38 in the case of Figure 6, and of the diameters of the pistons, DP and DT in the case of Figure 1, or of the diameters of the piston 2 and 37 in the case of Figure 6, one can alter the said characteristic line as desired. The relationship that is thereby modified is that between the retraction stroke CA and the correction stroke CT, enabling the designer of the shock absorber to achieve any desired response.

Adopting, in combination with the characteristic series arrangement of the cylinders, the one way control of the recovery, with the recovery connection 36 or 47, enables the recovery effect of the fluid from the corresponding chambers 17 or 42 to be modified at will and in an unsymmetrical manner by using the throttle valve 35 or 46, that may be adjusted at will even during operation, and the check valve 34 or 45, which forces the liquid to pass through the throttle during the retraction phase: this brings about a correction of the reaction with higher values.

The shock absorber as described in the present invention can be equipped with a pneumatic-hydraulic accumulator 31 of the known type, connected to the correction chamber 17 or 40, by means of hydraulic connection 33 and the relative interceptor and throttle valve 32, whether or not the recovery connection 26, 36 or 47 is present, so achieving a characteristic line, as shown in Figure 4, which is offset by the pressure PP at which the pneumatic-hydraulic accumulator is set; in this way a shock absorber is obtained that has a double characteristic response line: at very low pressures, that is, with external loads that are not high, the elastic effect is supported primarily by the accumulator, whereas the correction effect is active with higher external loading; this difference in operation can occur both as a result of the complete compression of the accumulator 31 and as a result of the closure of the interceptor valve 32.

The volume of the accumulator has to such as to avoid contact between the piston 18 of the correction chamber and the internal extremity of the correction chamber 17, or, in the case of the piston 37, preventing its complete retraction.

In practice the materials, dimensions and details of execution may be different from, but technically equivalent to those described without departing from the juridical domain of the present invention. The stem of the piston 37, for example, can be solid rather than hollow.

## Claims

1. Hydraulic shock absorber with self-adjusting reaction comprising a first double-acting hydraulic cylinder, associated with an elastic element (14), positioned between the support (12, 13) of the shock absorber on the stem (10) of the first cylinder and the external casing (1, 15) of the said first cylinder, for returning it to its original position after the external dynamic load ceases to be applied, having a piston (2) with openings (3, 4) for the reflux of hydraulic liquid from one chamber to the other, characterised in that it has a second hydraulic cylinder, single or double acting, connected in series with the previous one so that the two chambers without stem (1, 17 or 6, 40) are directly communicating, constituting a variable volume correction chamber; it has the second support (22, 39) of the shock absorber rigidly connected to the stem (38) or the body (21) of the said second cylinder; it has the two chambers (5, 6) of the first cylinder and of the second cylinder (17, 40) filled with a predetermined quantity of hydraulic liquid, but less than the total volume of the said chambers calculated with the pistons (2, 18, 37) and relative stems (19, 1, 38) fully extended.

2. Hydraulic shock absorber, as claimed in the previous claim, characterised in that it has control elements for the reflux of the liquid through the openings (3, 4) in the piston (2) of the said first cylinder consisting of disk shaped blades (7, 9), flexible or not, of which at least the one on the opposite side to the stem (7), being adjustable from the outside with a rod (11) inside the said stem (10) acting on it by means of an elastic element (8).

3. Hydraulic shock absorber, as claimed in one or more of the previous claims, characterised in that the said second cylinder consists of a double acting cylinder with annular chamber (20, 42) on the side of the stem (1, 38) connected to the outside.

4. Hydraulic shock absorber, as claimed in one or more of the previous claims, characterised in that the said annular chamber (20, 42) of the second cylinder is connected, by means of an hydraulic connection (26) inside the piston, or external to it, to the correction chamber (17, 40) so as to recover the liquid flowing out, during retraction, of the said annular chamber, thereby constituting the recovery chamber (20, 42), in the correction chamber.

5. Hydraulic shock absorber, as claimed in one or more of the previous claims, characterised in that it has a diameter of the second hydraulic cylinder (DC) which is larger than the diameter (DP) of the said first cylinder, in order to limit overall axial dimensions.

6. Hydraulic shock absorber, as claimed in one or more of the previous claims 4, 5, characterised in that it has a diameter of the stem (DS) of the said first cylinder which is smaller than the diameter of the stem (1, 38) of the said second cylinder.

7. Hydraulic shock absorber, as claimed in one or more of the previous claims 4, 5, 6, characterised in that it has the said hydraulic connection (36, 47) between the correction chambers (17, 40) and the recovery chambers (20, 42) comprising a one-way check valve (34, 45) in parallel with a throttle valve (35, 46) that can be adjusted even during operation.

8. Hydraulic shock absorber, as claimed in one or more of the previous claims, characterised in that it has a pneumatic-hydraulic accumulator (31) connected (33) to the said correction chamber, either directly or through a throttle and interceptor valve (32).

## Patentansprüche

1. Hydraulischer Stoßdämpfer mit selbstregelnder Reaktion, umfassend einen ersten, doppeltwirkenden Hydraulikzylinder, der miteinem Federelement (14) verbunden ist, das zwischen dem Halter (12, 13) des Stoßdämpfers an der Kolbenstange (10) des ersten Zylinders und dem Außengehäuse (1, 15) des ersten Zylinders angeordnet ist, um ihn in seine ursprüngliche Position zurückzubringen, nachdem die externe dynamische Belastung beendet ist, und einen Kolben (2) mit Öffnungen (3, 4) für den Rückfluß von Hydraulikflüssigkeit von einer Kammer in die andere besitzt, gekennzeichnet dadurch, daß er einen zweiten, einfach oder doppeltwirkenden Hydraulikzylinder besitzt, der mit dem Vorhergehenden in Reihe so verbunden ist, daß die zwei Kammern (1, 17 oder 6, 40) ohne Kolbenstange direkt kommunizieren, eine Ausgleichkammer mit variablem Volumen bildend; der zweite Halter (22, 39) des Stoßdämpfers starr an der Stange (381 oder dem Gehäuse (21) des zweiten Zylinders befestigt ist; die zwei Kammern (5, 6) des ersten Zylinders und des zweiten Zylinders (17, 40) mit einer vorgegebenen Menge Hydraulikflüssigkeit gefüllt sind, jedoch einer geringeren Menge als das mit den Kolben (2, 18, 37) und entsprechenden, voll ausgefahrenen Kolbenstangen (19, 1, 38) berechnete Gesamtvolumen der Kammern.

2. Hydraulischer Stoßdämpfer gemäß dem vorhergehenden Anspruch, gekennzeichnet dadurch, daß er Regelungselemente für den Rückfluß der Flüssigkeit durch die Öffnungen (3, 4) im Kolben (2) des ersten Zylinders besitzt, die aus scheibenförmigen, flexiblen oder nichtflexiblen Blättern (7, 9) bestehen, von denen mindestens das eine (7) auf der gegenüberliegenden Seite der Kolbenstange von der Außenseite mit einer Stange (11) innerhalb der Kolbenstange (10) einstellbar ist, die mit Hilfe eines Federelementes (8) auf dieses wirkt.

3. Hydraulischer Stoßdämpfer gemäß einem oder mehreren der vorhergehenden Ansprüche, gekennzeichnet dadurch, daß der zweite Zylinder aus einem doppeltwirkenden Zylinder mit einer Ringkammer (20, 42) auf der mit der Außenseite verbundenen Seite der Kolbenstange (1, 38) besteht.

4. Hydraulischer Stoßdämpfer gemäß einem oder mehreren der vorhergehenden Ansprüche, gekennzeichnet dadurch, daß die Ringkammer (20, 42) des zweiten Zylinders mit Hilfe einer hydraulischen Verbindung (26) innerhalb des Kolbens oder außerhalb von diesem mit der Ausgleichkammer (17, 40) verbunden ist, um die während des Zurückziehens aus der Ringkammer ausströmende Flüssigkeit zurückzugewinnen, dadurch die Rückgewinnungskammer (20, 42) in der Ausgleichkammer bildend.

5. Hydraulischer Stoßdämpfer gemäß einem oder mehreren der vorhergehenden Ansprüche, gekennzeichnet dadurch, daß sein zweiter hydraulischer Zylinder einen Durchmesser (DC) hat, der größer als der Durchmesser (DP) des ersten Zylinders ist, um die gesamten axialen Abmessungen zu beschränken.

6. Hydraulischer Stoßdämpfer gemäß einem oder mehreren der vorhergehenden Ansprüche 4, 5, gekennzeichnet dadurch, daß die Kolbenstange seines ersten Zylinders einen Durchmesser (DS) hat, der kleiner als der Durchmesser der Kolbenstange (1, 38) des zweiten Zylinders ist.

7. Hydraulischer Stoßdämpfer gemäß einem oder mehreren der vorhergehenden Ansprüche 4, 5, 6, gekennzeichnet dadurch, daß er zwischen den Ausgleichkammern (17, 40) und den Rückgewinnungskammern (20, 42) eine hydraulische Verbindung (36, 47) besitzt, die parallel zu einem Drosselventil (35, 46), das auch während des Betriebes eingestellt werden kann, ein Einweg-Rückschlagventil (34 ,45) umfaßt.

8. Hydraulischer Stoßdämpfer gemäß einem oder mehreren der vorhergehenden Ansprüche, gekennzeichnet dadurch, daß er einen pneumatisch-hydraulischen Speicher (31) besitzt, der entweder direkt oder über ein Drossel- und Absperrventil (32) mit der Ausgleichkammer in Verbindung (33) steht.

## Revendications

1. Absorbeur de choc hydraulique à réaction d'ajustage automatique comprenant un premier vérin hydraulique double effet, associé à un élément élastique (14), positionné entre le support (12, 13) de l'absorbeur de choc sur la tige (10) du premier vérin et le boîtier externe (1, 15) dudit premier vérin, pour le ramener à sa position d'origine après que la charge dynamique externe cesse d'être appliquée, comportant un piston (2) pourvu d'ouvertures (3, 4) pour le reflux de liquide hydraulique à partir d'une chambre vers l'autre, caractérisé en ce qu'il comporte un second vérin hydraulique, à simple ou double effet, connecté en série avec le précédent de sorte que les deux chambres sans tige (1, 17 ou 6, 40) sont directement communiquantes, formant une chambre de correction de volume variable, le second support (22, 39) de l'absorbeur de choc étant connecté de manière rigide à la tige (38) ou au corps (21) dudit second cylindre, les deux chambres (5, 6) du premier vérin et du second vérin (17, 40) étant remplies d'une quantité prédéterminée de liquide hydraulique, qui est inférieure au volume total desdites chambres calculé avec les pistons (2, 18, 37) et les tiges correspondantes (19, 1, 38) complètement étendus.

2. Absorbeur de choc hydraulique selon la revendication 1, caractérisé en ce qu'il est pourvu d'éléments de commande pour le reflux du liquide à travers les ouvertures (3, 4) dans le piston (2) dudit premier vérin, lesdits éléments de commande consistant en des pales en forme de disque (7, 9) flexibles ou non, dont au moins une située sur le côté opposé de la tige (7) est ajustable de l'extérieur avec une barre (11) à l'intérieur de la tige (10) agissant sur elle au moyen d'un élément élastique (8).

3. Absorbeur de choc hydraulique selon l'une ou plusieurs des revendications précédentes, caractérisé en ce que ledit second vérin consiste en un vérin double effet pourvu d'une chambre annulaire (20, 42) sur le côté de la tige (1, 38) connectée à l'extérieur.

4. Absorbeur de choc hydraulique selon l'une ou plusieurs des revendications précédentes, caractérisé en ce que ladite chambre annulaire (20, 42) du second vérin est connectée, au moyen d'une connexion hydraulique (26) à l'intérieur du piston ou à l'extérieur de celui-ci à la chambre de correction (17, 40), de manière à récupérer le liquide qui s'en écoule, pendant la rétraction, de ladite chambre annulaire, constituant ainsi la chambre de récupération (20, 42) dans la chambre de correction.

5. Absorbeur de choc hydraulique selon l'une ou plusieurs des revendications précédentes, caractérisé en ce que le diamètre du second vérin hydraulique (DC) est supérieur au diamètre (DP) dudit premier vérin, afin de limiter les dimensions axiales totales.

6. Absorbeur de choc hydraulique selon l'une ou plusieurs des revendications 4 et 5, caractérisé en ce que le diamètre de la tige (DS) dudit premier vérin est inférieur au diamètre de la tige (1, 38) dudit second vérin.

7. Absorbeur de choc hydraulique selon l'une ou plusieurs des revendications 4, 5 et 6, caractérisé en ce que ladite connexion hydraulique (36, 47) entre les chambres de correction (17, 40) et les chambres de récupération (20, 42) comprend une soupape d'arrêt (34, 45) en parallèle avec une soupape d'étranglement (35, 46) qui peut être ajustée même en fonctionnement.

8. Absorbeur de choc hydraulique selon l'une ou plusieurs des revendications précédentes, caractérisé en ce qu'un accumulateur pneumatique-hydraulique (31) est connecté (33) à ladite chambre de correction, soit directement soit par l'intermédiaire d'une soupape d'étranglement et de siphon (32).
